# EUROPÄISCHE PATENTANMELDUNG

(11) **EP 1 840 109 A1**
(43) Veröffentlichungstag der Anmeldung: **03.10.2007**
(21) Anmeldenummer: 06111825.3
(22) Anmeldetag: 28.03.2006
(51) Int. Cl.: C05D 11/00, C05D 3/02

(54) **Schwefelhaltiger Kalkdünger**

(71) Anmelder: GFR Gesellschaft für die Aufbereitung und Verwertung von Reststoffen mbH, 97080 Würzburg (DE)
(72) Erfinder: Demmich, Jörg, 97084 Würzburg (DE); Weißflog, Eckhard, 97234 Reichenberg-Lindflur (DE); Gerstner, Erwin, 97318, Kitzingen (DE); Kempf, Wolf-Dieter, 97346 Iphofen (DE)
(74) Vertreter: Schreiber, Christoph

(57) **Zusammenfassung**

Düngemittel enthaltend
a) 0,5 bis 70 MA.-% Produkte aus trocken und/oder quasitrocken arbeitenden Rauchgasentschwefelungsanlagen, die als Hauptbestandteil Calciumsulfit enthalten,
b) 30 bis 90 MA.-% Kalkprodukte und/oder Dolomit,
c) 0,5 bis 10 MA.-% pflanzenverfügbares Silikat.

## Beschreibung

Gegenstand der vorliegenden Erfindung ist ein schwefelhaltiger Kalkdünger mit verbesserten Eigenschaften und ein Verfahren zu seiner Herstellung.

Aus der DE 196 44 612 A1 ist ein Verfahren zur Herstellung von festen, rieselfähigen, vorzugsweise pelletisierten Düngemitteln aus trockenen Abfällen bekannt.

EP 1 046 623 A1 beschreibt ein Verfahren zur Herstellung von schwefelhaltigen Kalkdüngern. Hierzu werden trockene Produkte aus Rauchgasentschwefelungsanlagen eingesetzt und mit feinteiligen Kalkprodukten oder Dolomit vermischt. Der dadurch erhaltene Dünger weist aber noch nicht optimale Eigenschaften auf, insbesondere neigt das Düngemittel zu einer Verklumpung, was die Ausbringung erschwert.

Aufgabe der Erfindung war es, ein verbessertes Düngemittel bereit zu stellen.

Gelöst wird die Aufgabe durch ein Düngemittel mit den Merkmalen des Patentanspruchs 1.

Überraschenderweise führt die Kombination von Calciumsulfit, Kalkprodukten und/oder Dolomit und pflanzenverfügbarem Silikat zu Produkten, die zum einen eine wesentlich verbesserte Rieselfähigkeit aufweisen und wobei zum anderen die so gedüngten Pflanzen ein verbessertes Wachstum zeigen.

Das erfindungsgemäße Düngemittel enthält 0,5 bis 70 MA.% Produkte aus Rauchgasentschwefelungsanlagen, die als Hauptbestandteil Calciumsulfit enthalten und die aus trocken und/oder quasitrocken arbeitenden Rauchgasentschwefelungsverfahren stammen.

Die Entschwefelung findet bei diesen Verfahren in einem Reaktor bei Temperaturen um ca. 150°C bis 180°C unter Zugabe von Kalkmilch zum Rauchgas oder unter Zugabe von feinstteiligem Calciumhydroxid zum angefeuchteten Rauchgas statt. Die gebildeten Entschwefelungsprodukte enthalten überwiegend Calciumsulfithalbhydrat (CaSO₃ * 0,5 H₂O) und Calciumsulfathalbhydrat (CaSO₄ * 0,5 H₂O) sowie freies Ca(OH)₂ (Portlandit), untergeordnet CaCl₂ und CaCO₃, und sie fallen, da überschüssiges Wasser verdampft und sie mit dem entstaubten Rauchgas ausgetragen werden, pulverförmig an.

"Als Hauptbestandteil" bedeutet, dass in dem Produkt aus der Rauchgasentschwefelungsanlage Calciumsulfit den größten Anteil ausmacht. Der bevorzugte Gehalt an Calciumsulfit in dem Produkt aus der trocken und/oder quasitrocken arbeitenden Rauchgasentschwefelungsanlage beträgt mindestens 40 MA.-%, bevorzugt 50 bis 70 MA.-%.

Bevorzugt liegt der Gehalt an Produkten aus Rauchgasentschwefelungsanlagen im Düngemittel im Bereich vom 10 bis 60 MA.-%, mehr bevorzugt 40 bis 60 MA.-%.

Ein weiterer Bestandteil des erfindungsgemäßen Düngemittels sind Kalkprodukte und/oder Dolomit. Dolomit ist ein Calcium-Magnesium-Carbonat. Grundsätzlich sind alle calciumcarbonathaltigen Minerale geeignet.

Bevorzugte Gehalt an Kalkprodukten und/oder Dolomite sind 40 bis 80 MA.-%, mehr bevorzugt 40 bis 60 MA.-%.

Ein weiterer Bestandteil (0,5 bis 10 MA.-%) des erfindungsgemäßen Düngemittels sind pflanzenverfügbare Silikate. Silikate sind pflanzenverfügbar, wenn sie aufgrund ihres Entstehungsprozesses unter den in der Bodenkrume herrschenden Bedingungen aufgeschlossen und von den Pflanzen aufgenommen werden können. Entstehungsbedingt können die Einzelkomponenten der Düngemittelmischung bereits einen ausreichenden Gehalt an pflanzenverfügbarem Silikat enthalten. Geeignet sind Silikate des Natriums, Kaliums, Calciums und Magnesiums. Bekanntermaßen ist die Löslichkeit von Silikaten gering und hängt insbesondere von der Bindungsform, von der Temperatur und vom vorliegenden pH-Wert ab (siehe z.B. Lehrbuch der Bodenkunde, Scheffer/Schachtschabel, S. 42, Punkt c) Löslichkeit; F. Enke-Verlang, Stuttgart, 1989). Die Bestimmung des pflanzenverfügbaren Silikats kann z.B. über die Ermittlung des gelösten Siliziums im wässrigen Feststoff-/Bodenauszug oder einem vergleichbaren Verfahren stattfinden, welches allgemein in der Bodenkunde anerkannt ist.

Bevorzugte Gehalte an pflanzenverfügbarem Silikat sind 1 bis 8 MA.-%, mehr bevorzugt 2 bis 6 MA.-%.

Die erfindungsgemäßen Düngebestandteile können in einfacher Weise miteinander vermischt werden, um das erfindungsgemäße Düngemittel zu erhalten. Vorzugsweise wird das Gemisch unter Zusatz von Wasser oder wässrigen Suspensionen granuliert oder pelletisiert. Das Düngemittel, vorzugsweise in Form von Granulaten oder Pellets, verteilt die Freisetzung des Schwefels über einen längeren Zeitraum, so dass der Schwefel über die gesamte Wachstumsperiode zur Verfügung steht. Durch den Zusatz von Kalk und/oder Dolomit wird eine pH-Wert Erhöhung erreicht, die die Löslichkeit von Calciumsulfit limitiert und die Oxidation des Sulfits zum Sulfat verzögert. Bei Produkten aus trocken/quasitrocken arbeitenden Rauchgasentschwefelungsanlagen ist zumeist auch Schwefel in Form von Sulfat enthalten. Auch dieser zeigt gegenüber üblichem Gips herabgesetzte Löslichkeiten - vermutlich durch die Bildung von Mischkristallen oder speziellen Partikelformen.

Zusammen mit den eingesetzten Silikaten stehen den Pflanzen zwei wichtige Nährstoffe in erheblichem Umfang zur Verfügung, was überraschenderweise zu einem deutlich verbessertem Wachstum der Pflanzen führt. Überraschenderweise wird durch den Zusatz der Silikate die Rieselfähigkeit der Produkte verbessert.

Für die Herstellung von Granulaten oder Pellets kann reines Wasser verwendet werden. Es ist jedoch auch möglich wässrige Suspensionen zu verwenden, die zum Beispiel kalkhaltige Abfälle und/oder Nebenprodukte enthalten, wie sie bei der Brauch-, Trink- und Prozesswasseraufbereitung, der Zuckerherstellung, der Acetylen-Produktion oder Gelatineherstellung anfallen. Bei entsprechender Steuerung der Wasser- oder Suspensionsmenge können die Granulate oder Pellets so hergestellt werden, dass keine anschließende Trocknung erforderlich ist.

Durch den Zusatz eines Silikats kommt es zu einer Entklumpung der Agglomerate, so dass sich die Düngemittel beispielsweise durch einen Streuer, wie Schneckenstreuer, ausbringen lassen.

Durch die Kombination der drei Komponenten wird die Feuchte des Düngemittels in Bezug auf die Körnung des Gesamtgemisches auf den optimalen Bereich zum staubfreien Ausbringen mit herkömmlichem Gerät eingestellt.

In einer bevorzugten Ausführungsform liegt der Gehalt an Schwefel im erfindungsgemäßen Düngemittel zwischen 2 und 12 MA.-%. Zusätzlich können 1 bis 4 MA.-% Chlorid enthalten sein.

In einer Ausführungsform ist zusätzlich Selen enthalten mit einem Anteil von 1 bis 75 mg/kg Düngemittel. Dieses ist insbesondere dann von Vorteil, wenn mit dem Düngemittel Tiernahrungspflanzen gedüngt werden. Das Selen wird in der im Düngemittel vorliegenden Bindungsform leicht von den Pflanzen aufgenommen und ebenso leicht nach der Fütterung der Tiere von deren Verdauungstrakt absorbiert. In Selenmangelgebieten können die betroffenen Landwirt daher schon mit der Düngung der Futterpflanzen den Gehalt des für die Tierernährung wichtigen Spurenelements Selen erhöhen und müssen es nicht mehr über das Zufüttern von Nahrungsergänzungsstoffen tun.

Das erfindungsgemäße Düngemittel weist im Hinblich auf die Ausbringtechnik bevorzugt eine Schüttdichte über 500kg/m³, mehr bevorzugt über 700 kg/m³ auf.

Die Erfindung wird durch die nachfolgenden Beispiele näher erläutert.

### Beispiel

Es wurde ein Kalkdünger aus einem calciumsulfithaltigen Produkt einer quasitrocken arbeitenden Rauchgasentschwefelungsanlage (SAV-Produkt), einem Kalkschlamm aus der Kühlturmzusatzwasseraufbereitungsanlage (KZA-Schlamm) und einem Silikat in folgender Zusammensetzung hergestellt: 49 MA.-% SAV-Produkt, 49 MA.-% KZA-Schlamm, 2 MA.-% Silikat. Der Kalkdünger wies nach Granulierung eine hohe Schüttdichte (> 650 kg/m³) bei gleichzeitig sehr guter Rieselfähigkeit auf. Bei der Ausbringung mit herkömmlicher Streutechnik wurde ein für die Düngewirkung optimales Streubild erhalten. In der anschließenden Wachstumsperiode wurde bei den Pflanzen ein über weite Flächen vergleichbar gutes Wachstum mit kräftigen Pflanzenstängeln/-halmen erhalten.

### Vergleichsbeispiel

Es wurde ein Kalkdünger mit der Zusammensetzung: 50 MA.-% SAV-Produkt, 50 MA.-% KZA-Schlamm, jedoch ohne den Zusatz von Silikat hergestellt. Der Kalkdünger wies zwar eine relativ hohe Schüttdichte (620 kg/m³) auf, wobei jedoch bei der Granulierung starke Verklumpungen und ungleichmäßige Agglomeratbildungen beobachtet wurden. Die Ausbringung mit einem herkömmlichen Streuer ergab ein ungleichmäßiges, unbefriedigendes Streubild. Die anschließende Wachstumsperiode offenbarte ein über weite Flächen ungleichmäßiges Pflanzenwachstum bei schon augenscheinlich erkennbaren deutlich verschieden kräftigen Pflanzenstängeln/-halmen.

## Patentansprüche

1. Düngemittel enthaltend
a) 0,5 bis 70 MA.-% Produkte aus trocken und/oder quasitrocken arbeitenden Rauchgasentschwefelungsanlagen, die als Hauptbestandteil Calciumsulfit enthalten,
b) 30 bis 90 MA.-% Kalkprodukte und/oder Dolomit,
c) 0,5 bis 10 MA.-% pflanzenverfügbares Silikat.

2. Düngemittel nach Anspruch 1, **dadurch gekennzeichnet, dass** 2 bis 12 MA.-% Schwefel enthalten sind.

3. Düngemittel nach Anspruch 1 oder 2, **dadurch gekennzeichnet, dass** 1 bis 4 MA.-% Chlorid enthalten sind.

4. Düngemittel nach einem der Ansprüche 1 bis 3, **dadurch gekennzeichnet, dass** 1 bis 75 mg/kg Selen enthalten sind.

5. Düngemittel nach einem der Ansprüche 1 bis 4, **dadurch gekennzeichnet, dass** die Schüttdichte über 500 kg/m³ liegt.

6. Verfahren zur Herstellung des Düngemittels nach einem der Ansprüche 1 bis 5, **dadurch gekennzeichnet, dass**
a) 0,5 bis 70 MA.-% Produkte aus trocken und/oder quasitrocken arbeitenden Rauchgasentschwefelungsanlagen, die als Hauptbestandteil Calciumsulfit enthalten,
b) 30 bis 90 MA.-% Kalkprodukte und/oder Dolomit,
c) 0,5 bis 10 MA.-% pflanzenverfügbares Silikat vermischt werden.

7. Verfahren nach Anspruch 6, **dadurch gekennzeichnet, dass** das Gemisch anschließend granuliert oder pelletisiert wird.
